(19) Europäisches Patentamt
European Patent Office
Office européen des brevets

(11) **EP 2 607 856 A2**

(12) **EUROPÄISCHE PATENTANMELDUNG**

(43) Veröffentlichungstag:
  **26.06.2013 Patentblatt 2013/26**

(51) Int Cl.:
  ***G01D 5/14*** *(2006.01)*

(21) Anmeldenummer: **12007748.2**

(22) Anmeldetag: **15.11.2012**

(84) Benannte Vertragsstaaten:
  **AL AT BE BG CH CY CZ DE DK EE ES FI FR GB GR HR HU IE IS IT LI LT LU LV MC MK MT NL NO PL PT RO RS SE SI SK SM TR**
  Benannte Erstreckungsstaaten:
  **BA ME**

(30) Priorität: **21.12.2011 DE 102011121842**

(71) Anmelder: **ROBERT BOSCH GMBH**
  **70442 Stuttgart (DE)**

(72) Erfinder:
  • **Hess, Felix**
    **71642 Ludwigsburg (DE)**

  • **Schmidt, Ralf**
    **70839 Gerlingen (DE)**
  • **Vieth, Ulrich**
    **44267 Dortmund (DE)**
  • **Voss, Martin**
    **70499 Stuttgart (DE)**
  • **Fehse, Jochen**
    **71272 Renningen (DE)**

(74) Vertreter: **Wiesmann, Stephan**
  **Bosch Rexroth AG**
  **DC/IPR**
  **Zum Eisengießer 1**
  **97816 Lohr am Main (DE)**

(54) **Vorrichtung zur Messung von Drehmoment, Drehrichtung und Drehgeschwindigkeit einer Welle eines Getriebes, insbesondere einer Antriebswelle eines Azimutgetriebes einer Windkraftanlage**

(57)    Die Erfindung betrifft eine Vorrichtung zur Messung von Drehmoment, Drehrichtung und Drehgeschwindigkeit einer Welle (1) eines Getriebes (2), insbesondere einer Abtriebswelle eines Azimutgetriebes, wobei an einem Außenumfang (3) der Welle (1) Bänder (4, 5) positionsfest anbringbar sind, die durch Messsensoren (6, 7) detektierbar sind und eine Torsion der Welle (1) messbar machen, wobei die Messsensoren (6, 7) jeweils einen Hall-Sensor (8) aufweisen und an zwei unterschiedlichen Positionen des Außenumfangs (3) der Welle (1) jeweils ein Band (4, 5) angeordnet ist, welches polygonale Durchbrüche (9) und/oder Vertiefungen (10) umfasst, wobei sich zwischen den Durchbrüchen (9) und/ oder Vertiefungen (10) Stege (11) befinden, die über Messsensoren (6, 7) detektierbar sind. Ferner wird ein Verfahren zum Betreiben einer Vorrichtung (1) zur Messung von Drehmoment, Drehrichtung und Drehgeschwindigkeit einer Welle (1) beansprucht.

Fig. 1

EP 2 607 856 A2

**Beschreibung**

GEBIET DER ERFINDUNG

Die vorliegende Erfindung betrifft eine Vorrichtung zur Messung von Drehmoment, Drehrichtung und Drehgeschwindigkeit einer Welle eines Getriebes, insbesondere einer Abtriebswelle eines Azimutgetriebes einer Windkraftanlage, wobei an einem Außenumfang der Welle Bänder positionsfest anbringbar sind, die durch Messsensoren detektierbar sind und eine Torsion der Welle messbar machen, wobei die Messsensoren jeweils einen Hall-Sensor aufweisen. Ferner betrifft die Erfindung ein Verfahren zum Betreiben einer solchen Vorrichtung.

Das Einsatzgebiet der vorliegenden Erfindung erstreckt sich insbesondere auf Azimutgetriebe für moderne Windkraftanlagen. Das Einsatzgebiet ist nicht nur auf Windkraftanlagen begrenzt, es gibt beispielsweise bei zahlreichen Krahntypen die Möglichkeit, den Ausleger durch mehrere Getriebe um eine vertikale Achse zu drehen.

HINTERGRUND DER ERFINDUNG

Aus dem allgemein bekannten Stand der Technik ist bekannt, dass an Windkraftanlagen die Gondel gedreht wird, um den Rotor der Windrichtung nachzuführen. Auch die Rotorblätter müssen um ihre Längsachse gedreht werden, um die richtige Blattstellung einzustellen. Dabei müssen sehr große Reibmomente in den jeweiligen Pitch- und Azimutlager überwunden werden.

Aufgrund der großen erforderlichen Drehmomente können hydraulische Antriebe oder elektrische Antriebe eingesetzt werden. Beim hydraulischen Antrieb greift beispielsweise ein Hydraulikzylinder an einen Exzenter an und erlaubt dadurch eine Drehung. Dabei ist die Drehbewegung aber auf weniger als eine halbe Umdrehung beschränkt. Sollen größere Drehbewegungen ausgeführt werden, oder ist der Einsatz einer hydraulischen Lösung aus anderen Gründen nicht erwünscht, wird ein elektrischer Antrieb eingesetzt. Bei elektrischen Antrieben wird die hohe Drehzahl eines Elektromotors über ein mehrstufiges Getriebe auf eine niedrige Drehzahl übersetzt. Das Abtriebsritzel des Getriebes greift in einen Zahnkranz ein, der meist als Teil des Lagers ausgeführt ist. Dadurch kann die Gondel der Windkraftanlage gedreht werden.

Sind die erforderlichen Drehmomente sehr groß, werden mehrere Antriebe angebracht. An den Getrieben der Antriebe können Schäden auftreten, wie beispielsweise defekte Lager, wobei das Reibmoment im Getriebe dadurch ansteigt. Entsprechend gibt das Getriebe bei gleichbleibender Motorleistung weniger Drehmoment auf den Zahnkranz ab.

Sind nur wenige Antriebe vorhanden, so muss die Motorleistung zur Erzielung des gleichen Antriebmomentes ansteigen. Dabei steigt auch der Motorstrom an.

Anhand des messbaren Stromanstiegs ist die Erkennung eines Getriebedefekts möglich. Sind sehr viele Antriebe vorhanden, ist der Anstieg des Motorstroms derart gering, dass eine eindeutige Messung nicht möglich ist und ein Defekt deshalb nicht erkannt werden kann. Wenn das ganze Antriebsmoment des Elektromotors zur Überwindung der Reibung im defekten Lager verloren geht, treibt die Abtriebswelle des Getriebes nicht mehr den Zahnkranz an, sondern der Zahnkranz wird von der Abtriebswelle angetrieben. Aufgrund des Defektes werden die verbleibenden Antriebe und ihre Getriebe überlastet und über längere Zeit ebenfalls geschädigt.

Aus der DE 10 2006 054 179 A1 geht eine Vorrichtung zur Messung des Drehmomentes an einer Welle, insbesondere zur Messung des Lenkmomentes einer Zahnstangen-Hilfskraftlenkung eines Kraftfahrzeuges hervor. Die Welle ist in eine Eingangswelle und eine Ausgangswelle unterteilt, wobei die beiden Wellenteile durch ein Torsionselement mit reduzierter Steifigkeit verbunden sind. Das Torsionselement trägt eine magnetische Gebereinheit, deren Kodierung durch Torsion veränderbar ist und kann durch eine der Gebereinheit zugeordneten Sensoreinheit ausgelesen werden. Eine solche Vorrichtung zur Messung des Drehmomentes an einer Welle eignet sich jedoch nicht für betragsmäßig große Drehmomente, wie sie in Azimutgetriebe einer Windenergieanlage vorzufinden sind.

Aus der DE 199 07 270 A1 geht eine andere Vorrichtung zur Messung des Drehmomentes einer Welle, insbesondere der Abtriebswelle eines Kraftfahrzeuggetriebes hervor. Über einen vorgegebenen axialen Bereich ist die Welle mit nur einer Manschette versehen, die derart mit der Welle verbunden ist, dass eine Torsion der Welle zu einer Torsion der Manschette führt. Der Manschette ist eine Messanordnung zur Feststellung der Größe der Torsion zugeordnet. Zwar kann mit dieser technischen Lösung eine Messung des Drehmomentes an einer Welle erfolgen, jedoch besteht ein Nachteil der bekannten Lösung darin, dass nur Wellen mit einem relativ geringen Durchmesser, die innerhalb eines relativ kleinen Wellenabschnittes eine große Torsion aufweisen, gemessen werden können. Für geringe Torsionsbeträge bietet diese Vorrichtung keine präzise Messmöglichkeit.

OFFENBARUNG DER ERFINDUNG

Ausgehend von dem vorgehend genannten Stand der Technik ist es die Aufgabe der vorliegenden Erfindung, eine Vorrichtung und ein Verfahren zum Betreiben einer solchen Vorrichtung zur Verfügung zu stellen, um auf einfache Art und Weise große Drehmomente zu messen, die aufgrund des Wellendurchmessers und der Materialeigenschaften die Welle nur geringfügig tordieren.

Die Aufgabe wird ausgehend von einer Vorrichtung zur Messung von Drehmoment, Drehrichtung und Drehgeschwindigkeit einer Welle gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor. Verfahrenstechnisch wird die Aufgabe durch Anspruch 6 gelöst.

Erfindungsgemäß ist an zwei unterschiedlichen Positionen des Außenumfangs der Welle jeweils ein Band angeordnet, welches polygonale Durchbrüche und/oder Vertiefungen umfasst, wobei sich zwischen den Durchbrüchen und/oder Vertiefungen Stege befinden, die über Messsensoren detektierbar sind. Die Bänder werden derart an dem Außenumfang der Welle angebracht, dass ein verrutschen oder verdrehen ausgeschlossen ist. Das Material aus dem die Bänder oder zumindest die Stege der Bänder bestehen, sollte magnetisierbar sein, so dass die Messsensoren über Magnetfeldänderungen die Stege zwischen den Durchbrüchen und/oder Vertiefungen detektieren, wobei in den Messsensoren ein Magnet integriert ist, der ein Magnetfeld erzeugt, welches von den Stegen beeinflusst wird. Die Messung der Stege durch die Magnetfeldänderung erweist sich bei Wellen, die in einem Ölbad laufen als besonders vorteilhaft. Es ist darauf hingewiesen, dass ein Band, welches über eine Struktur verfügt nicht zwingend erforderlich ist. Die Nutzung etwaiger Markierungen, Vertiefungen und/oder vorhandener Strukturen, beispielsweise wie die eines Ritzels ist möglich.

Gemäß einer die Erfindung weiter verbessernden Maßnahme wird vorgeschlagen, dass die Bänder mindestens ein Durchbruch und/oder mindestens eine Vertiefung aufweisen, wobei die Abmessung des Durchbruchs und/oder der Vertiefung, über den Umfang des Bandes gemessen, größer ist, als die Abmessungen der übrigen Durchbrüche und/oder Vertiefungen. Durch eine deutliche Unterscheidung mindestens eines Durchbruchs und/oder einer Vertiefung, lässt sich ein präziser Bezugspunkt definieren. Denkbar ist auch ein Durchbruch- und/oder Vertiefungsmuster, mit dessen Hilfe eine genaue Positionsbestimmung des Bandes möglich ist.

Vorzugsweise weisen zur präziseren Messung des Drehmoments die Bänder einen maximalen Abstand zueinander auf und jeder Messsensor umfasst mindestens zwei Hall-Sensoren. Ein maximaler Abstand ermöglicht geringe Drehmomente der Welle zu messen. Je größer der Abstand zwischen den beiden Sensoren ist, umso größer ist die gemessene Verdrehung der Welle. Bei Wellen die aufgrund ihres Durchmessers oder ihrer Materialeigenschaften selbst bei großen Drehmomenten nur eine geringe Torsion aufweisen, lässt sich über den Abstand der Bänder zueinander die gemessene Verdrehung der Welle vergrößern. Eine Anordnung von mindestens zwei Hall-Sensoren in jedem Messsensor erhöht die Genauigkeit der Erkennung der Stege.

Ein Vorteil der erfindungsgemäßen Lösung liegt insbesondere darin, dass die Welle Wellenkomponenten wie Planetenträger und Antriebsritzel aufweist, an denen die Bänder anbringbar sind. Die Planetenträger ist an einem Ende der Welle und das Antriebsritzel an einem anderen Ende der Welle angeordnet. Dies ermöglicht einen noch größeren Abstand zwischen den beiden Bändern, die eine größere Verdrehung der Welle zur Folge hat.

Des Weiteren bevorzugt ist, dass die Messsensoren senkrecht zu den Bändern angeordnet sind und einen Abstand zu den Bändern von weniger als 5 mm aufweisen. Eine senkrechte Anordnung der Messsensoren gewährleistet eine optimale Detektion der Stege, wobei ein geringer Abstand zwischen Band und Sensor zur Genauigkeit der Messung beiträgt.

Zum Betreiben der Vorrichtung zur Messung von Drehmoment, Drehrichtung und Drehgeschwindigkeit der Welle, wird ferner ein Verfahren angegeben mit welchem zur Kalibrierung des Messsignals das Getriebe mit einer konstanten Drehzahl ohne Belastung betrieben wird, wobei nach der Montage der Bänder an die Welle und/oder an Wellenkomponenten, eine aus der Bewegung der Welle resultierende Referenz-Stegfolge definiert wird. Aufgrund von Fertigungstoleranzen weisen die Durchbrüche und/oder Vertiefungen geringfügig unterschiedliche Abmessungen auf. Während der einmaligen Kalibrierung wird definiert, welchen Abstand die einzelnen Stege vom ersten Messsensor zu den Stegen des zweiten Messsensors haben.

Vorzugsweise wird die Referenz-Stegfolge als Kalibrierungswert in einer Auswerteelektronik dauerhaft gespeichert. Für einen im Laufe des weiteren Verfahrens benötigten Vergleich wird die zuvor gemessene Referenz-Stegfolge gespeichert.

Es wird weiterhin vorgeschlagen, dass die Drehrichtung der Welle durch einen Vergleich der Referenz-Stegfolge mit der Stegfolge während des Betriebes des Getriebes bestimmt wird. Wenn die gemessen Abfolge der inversen Abfolge der Referenz-Stegfolge entspricht, liegt eine negative Drehrichtung vor. Liegt überhaupt keine Übereinstimmung mit der Referenz-Stegfolge vor sollte auf einen Fehler geschlossen werden.

Des Weiteren bevorzugt ist, dass unter einer Torsionsbelastung der Welle im Betrieb des Getriebes eine zeitliche Verschiebung der Stegfolge der beiden Bänder zueinander gemessen wird. Diese zeitliche Verschiebung der Stegfolge, lässt auf eine Verdrehung der Welle hindeuten. Die gemessene Verschiebung der Stege der Bänder hängt von der Auslegung der Welle und dem Abstand der Bänder zueinander ab und kann vorzugsweise im zweistelligen Millisekunden-Bereich liegen.

Es wird weiterhin optional vorgeschlagen, dass die zeitliche Verschiebung der Stegfolge mittels der Drehgeschwindigkeit der Welle in eine lokale Verschiebung der Stegfolge umgerechnet wird, wobei daraus das übertragene Drehmoment der Welle berechnet wird. Die Drehgeschwindigkeit v der Welle wird aus dem zeitlichen Abstand t der Stege eines Bandes unter Zuhilfenahme folgender Formel bestimmt:

$$v = s / r / t$$

Der räumliche Abstand der Flanken s und der Radius r der Welle oder der Wellenkomponenten, an denen das Band angeordnet ist, wird als bekannt vorausgesetzt.

Insbesondere bei einer Windkraftanlage, welche für eine Drehung der Gondel mehrere parallel geschaltete Azimutantriebe besitzt, wobei ein Azimutantrieb jeweils aus einem Elektromotor und einem Azimutgetriebe bestehen, lassen sich durch einen Vergleich der gemessenen Drehmomente an den Abtriebswellen aller Azimutgetriebe, defekte Azimutgetriebe aufgrund des signifikant kleineren Drehmoments ausfindig machen.

KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:

Fig. 1 eine schematische Schnittdarstellung durch ein Getriebe mit einer Vorrichtung zur Messung von Drehmoment, Drehrichtung und Drehgeschwindigkeit einer Welle.

Fig. 2 eine vergrößerte Darstellung eines Messsensors mit zwei Hall-Sensoren unterhalb dessen ein Band mit Durchbrüchen und/oder Vertiefungen angeordnet ist und einen Graphen der Messung einer Referenz-Stegfolge, bei dem die Spannung über die Zeit aufgetragen ist.

DETAILLIERTE BESCHREIBUNG EINER BEVORZUGTEN AUSFÜHRUNGSFORM

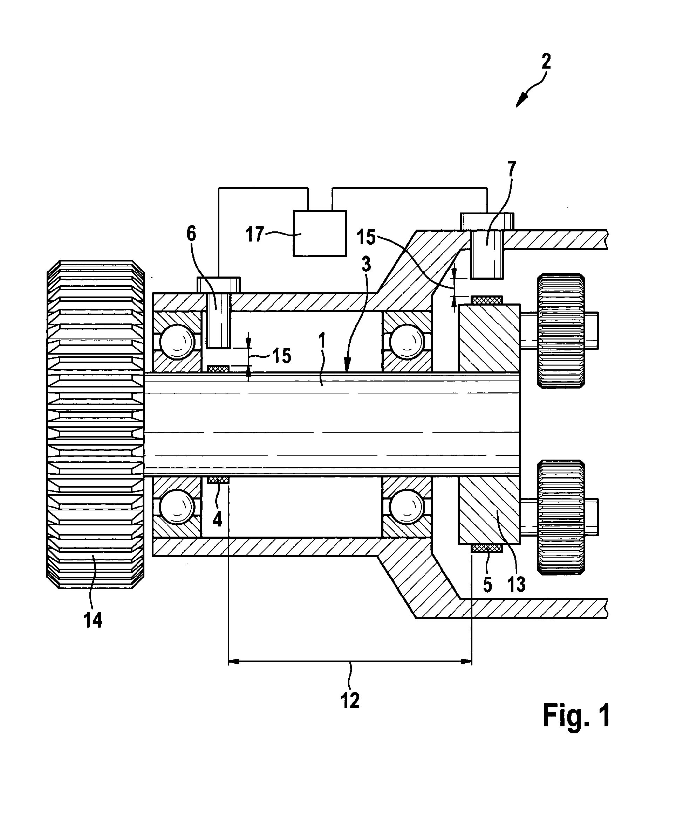

Gemäß Fig.1 weist die erfindungsgemäße Vorrichtung zur Messung von Drehmoment, Drehrichtung und Drehgeschwindigkeit einer Welle 1 eines Getriebes 2, zwei Bändern 4, 5 auf, wobei ein erstes Band 4 am Außenumfang 3 der Welle 1 angeordnet ist und ein zweites Band 5 an einer Planententräger 13 angeordnet ist. Die Bänder 4, 5 werden durch Messsensoren 6, 7, welche senkrecht zu den Bändern 4, 5 angeordnet sind und einen Abstand 15 von weniger als 5 mm aufweisen, detektiert. Die Messsensoren 6, 7 zeichnen ein Signal ausgehend von den Bänder 4, 5 auf. Dieses Signal ist die Stegfolge des jeweiligen Bandes 4, 5 während des Betriebes des Getriebes 2 und wird in einer Auswerteelektronik 17 verarbeitet und gespeichert.

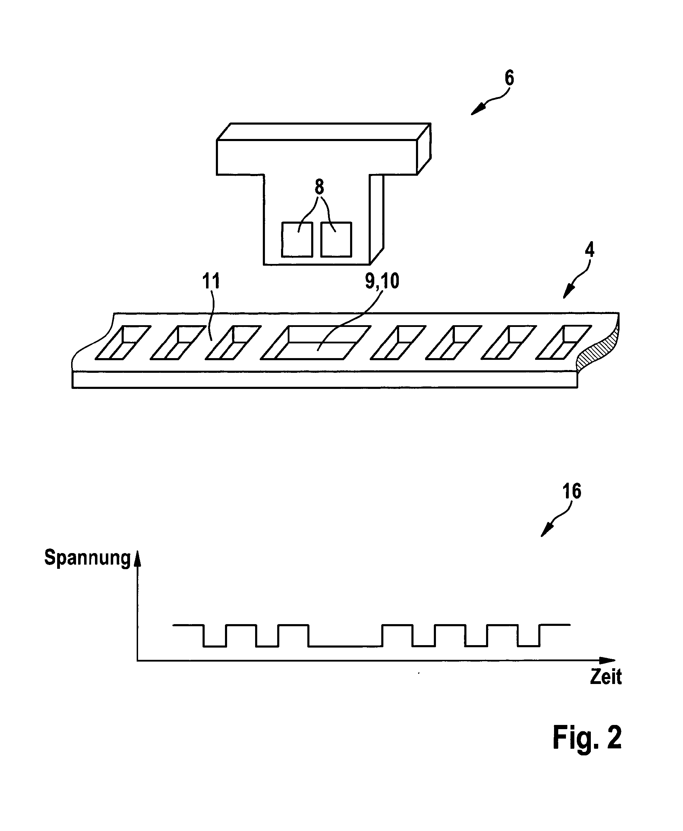

Fig. 2 zeigt einen der zwei Messsensoren 6, 7, welcher zwei Hall-Sensoren 8 umfasst, wobei mindestens zwei Hall-Sensoren 8 für eine präzise Signalerkennung benötigt werden. Das Band 4 weist Durchbrüche 9 und/oder Vertiefungen 10 auf, wobei sich zwischen zwei Durchbrüche 9 und/oder Vertiefungen 10 Stege 11 befinden. Eines der Durchbrüche 9 und/oder eines der Vertiefungen 10, dessen Abmessung größer ist, als die Abmessungen der übrigen Durchbrüche 9 und/oder Vertiefungen 10 dient zur Definition einer Referenz-Stegfolge 16. Die Referenz-Stegfolge 16 des Bandes 4 ist unterhalb des Bandes skizziert.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, das erste Band 4 am Antriebsritzel 14 anzuordnen, um den Abstand 12 zwischen den beiden Bändern 4, 5 zu vergrößern. Des Weiteren können statt Bänder 4, 5 die Durchbrüche 9 und/oder Vertiefungen 10 aufweisen auch Markierungen an die Welle 1 und/oder an Wellenkomponenten 13, 14 angebracht werden oder vorhandene Strukturierungen, wie die eines Ritzels genutzt werden. Eine Strukturierung der Welle durch vorzugsweise Laser oder spanenden Verfahren ist möglich.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Bezugszeichenliste**

1 Welle

2 Getriebe

3 Außenumfang

4 erstes Band

5 zweites Band

6 erster Messsensor

7 zweiter Messsensor

8 Hall-Sensor

9 Durchbruch

10 Vertiefung

11 Steg

12 Abstand

13 Planetenträger

14 Antriebsritzel

15 Abstand

16 Referenz-Stegfolge

17 Auswerteelektronik

**Patentansprüche**

1. Vorrichtung zur Messung von Drehmoment, Drehrichtung und Drehgeschwindigkeit einer Welle (1) eines Getriebes (2), insbesondere einer Abtriebswelle eines Azimutgetriebes einer Windkraftanlage, wobei an einem Außenumfang (3) der Welle (1) Bänder (4, 5) positionsfest anbringbar sind, die durch Messsensoren (6, 7) detektierbar sind und eine Torsion der Welle (1) messbar machen, wobei die Messsensoren (6, 7) jeweils einen Hall-Sensor (8) aufweisen, **dadurch gekennzeichnet, dass** an zwei unterschiedlichen Positionen des Außenumfangs (3) der Welle (1) jeweils ein Band (4, 5) angeordnet ist, welches polygonale Durchbrüche (9) und/oder Vertiefungen (10) umfasst, wobei sich zwischen den Durchbrüchen (9) und/oder Vertiefungen (10) Stege (11) befinden, die über Messsensoren (6, 7) detektierbar sind.

2. Vorrichtung nach Anspruch 1, **dadurch gekennzeichnet, dass** die Bänder (4, 5) mindestens ein Durchbruch (9) und/oder mindestens eine Vertiefung (10) aufweisen, wobei die Abmessung des Durchbruchs (9) und/oder der Vertiefung (10), über den Umfang des Bandes (4, 5) gemessen, größer ist, als die Abmessungen der übrigen Durchbrüche (9) und/oder Vertiefungen (10).

3. Vorrichtung nach Anspruch 1, **dadurch gekennzeichnet, dass** zur präziseren Messung des Drehmoments die Bänder (4, 5) einen maximalen Abstand (12) zueinander aufweisen und jeder Messsensor (6, 7) mindestens zwei Hall-Sensoren (8) umfasst.

4. Vorrichtung nach Anspruch 1 oder 3, **dadurch gekennzeichnet, dass** die Welle (1) Wellenkomponenten wie Planetenträger (13) und Antriebsritzel (14) aufweist, an denen die Bänder (4, 5) anbringbar sind.

5. Vorrichtung nach Anspruch 1, **dadurch gekennzeichnet, dass** die Messsensoren (6, 7) senkrecht zu den Bändern (4, 5) angeordnet sind und einen Abstand (15) zu den Bändern (4, 5) von weniger als 5 mm aufweisen.

6. Verfahren zum Betreiben einer Vorrichtung nach einem der vorhergehenden Ansprüche, **dadurch gekennzeichnet, dass** zur Kalibrierung des Messsignals das Getriebe (2) mit einer konstanten Drehzahl ohne Belastung betrieben wird, wobei nach der Montage der Bänder (4, 5) an die Welle (1) und/oder an Wellenkomponenten (13, 14), eine aus der Bewegung der Welle (1) resultierende Referenz-Stegfolge (16) definiert wird.

7. Verfahren zum Betreiben einer Vorrichtung nach Anspruch 6, **dadurch gekennzeichnet, dass** die Referenz-Stegfolge (16) als Kalibrierungswert in einer Auswerteelektronik (17) dauerhaft gespeichert wird.

8. Verfahren zum Betreiben einer Vorrichtung nach Anspruch 6 oder 7, **dadurch gekennzeichnet, dass** die Drehrichtung der Welle (1) durch einen Vergleich der Referenz-Stegfolge (16) mit der Stegfolge während des Betriebes des Getriebes (2) bestimmt wird.

9. Verfahren zum Betreiben einer Vorrichtung nach Anspruch 6, **dadurch gekennzeichnet, dass** unter einer Torsionsbelastung der Welle (1) im Betrieb des Getriebes (2) eine zeitliche Verschiebung der Stegfolge der beiden Bänder (4, 5) zueinander gemessen wird.

10. Verfahren zum Betreiben einer Vorrichtung nach Anspruch 6 oder 9, **dadurch gekennzeichnet, dass** die zeitliche Verschiebung der Stegfolge mittels der Drehgeschwindigkeit der Welle (1) in eine lokale Verschiebung der Stegfolge umgerechnet wird, wobei daraus das übertragene Drehmoment der Welle (1) berechnet wird.

Fig. 1

**6**

**8**

**11**

**9,10**

**4**

**16**

Spannung

Zeit

## Fig. 2

**IN DER BESCHREIBUNG AUFGEFÜHRTE DOKUMENTE**

**In der Beschreibung aufgeführte Patentdokumente**

- DE 102006054179 A1
- DE 19907270 A1